## Europäisches Patentamt

## European Patent Office

## Office européen des brevets

(11) Veröffentlichungsnummer: **0 167 957**
**A2**

(12) # EUROPÄISCHE PATENTANMELDUNG

(21) Anmeldenummer: **85108142.2**

(22) Anmeldetag: **01.07.85**

(51) Int. Cl.⁴: **B 01 J 41/04**

(30) Priorität: **10.07.84 DE 3425358**

(43) Veröffentlichungstag der Anmeldung:
**15.01.86 Patentblatt 86/3**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Schlingmann, Merten, Dr.**
**Schneidhainer Strasse 32a**
**D-6240 Königstein/Taunus(DE)**

(72) Erfinder: **Keller, Reinhold, Dr.**
**Wiesenweg 5**
**D-6232 Bad Soden am Taunus(DE)**

(72) Erfinder: **Dürsch, Walter, Dr.**
**In der Braubach 4**
**D-6240 Königstein/Taunus(DE)**

(72) Erfinder: **Keil, Karl-Heinz, Dr.**
**Lübecker Weg 3**
**D-6450 Hanau 6(DE)**

(72) Erfinder: **Engelhardt, Friedrich, Dr.**
**Hünfelder Strasse 20**
**D-6000 Frankfurt am Main 61(DE)**

(54) **Verfahren zur Isolierung wasserlöslicher saurer Verbindungen.**

(57) Saure Verbindungen können aus ihren wäßrigen Lösungen in freier Form isoliert werden, wenn man die sauren Lösungen mit schwach basischen Adsorberharzen in Kontakt bringt, die beladenen Harze gegebenenfalls mit Wasser und/oder einem organischen Lösemittel wäscht und die adsorbierten sauren Verbindungen mit Wasser und/oder Dampf desorbiert. Als Adsorberharze sind schwach basische Ionenaustauscher mit tertiären Aminogruppen bevorzugt.

Croydon Printing Company Ltd.

HOECHST AKTIENGESELLSCHAFT     HOE 84/F 156     Dr.KL/mü

<u>Verfahren zur Isolierung wasserlöslicher saurer Verbindungen</u>

Die Isolierung saurer Verbindungen aus wäßrigen Lösungen mit Hilfe von Anionenaustauschern mit tertiären Amino- oder quaternären Ammoniumgruppen ist in der Technik weit verbreitet. Es kommt hierbei zu einer ionischen Bindung zwischen Adsorbens und Adsorbat, weshalb zur Desorption wäßrige Lösungen alkalischer Substanzen erforderlich werden. Ein Nachteil dieses Verfahren besteht darin, daß die sauren Substanzen in Form ihrer Salze anfallen und somit, wenn die freien Säuren gewünscht werden, diese erst wieder aus ihren Salzen freigesetzt werden müssen, was mit einem Salzanfall verbunden ist.

Aus der deutschen Patentschrift 3 043 766 (US-Patentschrift 4 323 702) ist ein Verfahren zur Gewinnung von Carbonsäuren aus einer wäßrigen Lösung durch Adsorption an Feststoffen bekannt, das da durch gekennzeichnet ist, daß man allein oder in Kombination mit einem geeigneten Träger als Adsorptionsmittel eine vernetzte polymere Verbindung einsetzt, die eine Pyridin-Skelettstruktur aufweist und daraus die adsorbierte Carbonsäure mit einem aliphatischen Alkohol, einem Keton oder einem Carbonsäureester desorbiert. Dieses Verfahren erfordert somit organische Lösemittel, die oft aus Sicherheitsgründen unerwünscht sind und deren vollständige Beseitigung und Wiedergewinnung recht aufwendig ist.

Die deutsche Patentschrift 1 274 128 betrifft ein Verfahren zum Anreichern bzw. Abtrennen von organischen Verbindungen mit stark heteropolaren Molekülteilen aus diese enthaltenden wäßrigen Lösungen oder Dispersionen mit Hilfe von Adsorptionsmitteln und anschließender Desorption, das dadurch gekennzeichnet ist, daß man als Adsorptionsmittel Teilchen von nichtionogenen wasserunlöslichen vernetzten Polymerisaten makroretikularer Struktur aus etwa 2 bis 100 Gewichtsprozent mindestens eines Poly-(vinyl)-benzol-monomeren verwendet, deren Teilchengröße den US-Maschengrößen 16 bis 100, gegebenenfalls aber auch bis 400, entsprechen und die eine Porosität von mindestens 10 %, eine aktive Oberfläche von 10 bis zu 2000 $m^2/g$ besitzen und nicht merklich von dem abzutrennden Stoff angequollen werden. Als anzureichernde bzw. abzutrennende organische Verbindungen mit stark heteropolaren Molekülteilen werden u.a. auch Fettsäuren mit 1 bis 10 C-Atomen genannt. Die Desorption kann mit Wasser, wäßriger Säure oder alkalischen Lösungen oder mit einem organischen Lösemittel erfolgen, das leicht durch übliche Mittel abtrennbar ist. Als Monomere, die zur Herstellung der vernetzten Polymerisate dienen sollen, wird eine Fülle von ethylenisch ungesättigten Verbindungen aufgezählt, darunter auch das nicht in der Literatur beschriebene Divinylpyridin als einzige Verbindung, der eine basische Reaktion zugeschrieben werden könnte. Naturgemäß findet sich hierfür auch kein Beispiel. Nähere Angaben oder Beispiele für die Desorption saurer Verbindungen mit Wasser sind ebenfalls in dieser Patentschrift nicht enthalten.

Es wurde nun überraschenderweise gefunden, daß saure Verbindungen aus ihren wäßrigen Lösungen besonders vorteilhaft isoliert werden können, wenn man die sauren wäßrigen Lösungen mit schwach basischen Adsorberharzen, die vorzugsweise tertiäre Aminogruppen enthalten, in Kontakt bringt, gegebenenfalls die beladenen Harze mit Wasser und/oder organischen Lösemitteln wäscht und die adsorbierten sauren Verbindungen mit Wasser von 1 bis etwa 100°C, bevorzugt 10 bis 90°C, und/oder Dampf desorbiert.

Weitere bevorzugte Ausgestaltungen der Erfindung werden im folgenden näher erläutert bzw. in den Patentansprüchen niedergelegt.

Als schwach basische Adsorberharze kommen alle bekannten schwach basischen Anionenaustauscher mit tertiären Aminogruppen in Betracht, wie sie beispielsweise in Ullmanns Encyklopädie der technischen Chemie, 4. Aufl., Band 13, Seiten 297 - 303, beschrieben werden. Entsprechende Harze mit primären oder sekundären Aminogruppen sind grundsätzlich ebenfalls geeignet, können aber natürlich nicht eingesetzt werden, wenn die zu behandelnden Lösungen Stoffe enthalten, die mit diesen Aminogruppen reagieren können, beispielsweise Ketogruppen in Ketocarbonsäuren, die mit den primären Aminogruppen eine Reaktion eingehen können.

Geeignete schwach basische Adsoberharze, die tertiäre Aminogruppen enthalten, wurden beispielsweise auch in der vorstehend genannten deutschen Patentschrift 3 043 766, der deutschen Auslegeschrift 1 420 737 und in den deutschen Offenlegungsschriften 3 209 224 beschrieben sowie in den deutschen Offenlegungsschriften 3 324 834 und 3 324 835 und den entsprechenden europäischen Patentanmeldungen mit den Veröffentlichungsnummern EP-A 0 134 921 und EP-A 0 131 179 vorgeschlagen.

Bevorzugt werden Polymerisate
a) aus 10 - 99,9 % Vinylimidazol und 0 - 80 % N-Vinyl-N-methylacetamid und 0,1 - 50 % Methylenbisacrylamid oder
b) aus 75 - 99,9 % Vinylpyridin, 0,1 - 25 % Trimethylolpropantrimethylacrylat und 0 - 25 % Vinyltrimethylsilan oder
c) auf Basis Styrol-Divinylbenzol mit Dimethylaminogruppen oder
d) auf Basis Acrylat-Divinylbenzol mit niederen Dialkylaminogruppen, beispielsweise Acrylsäure oder Methacrylsäure, die mit Dimethylaminoethanol verestert sind, sowie N-(2-Dimethylaminoethyl)-acrylamid bzw. N-(2-Dimethylamino-ethyl)-methacrylamid
eingesetzt.

Als saure Verbindungen, die aus ihren wäßrigen Lösungen isoliert werden können, kommen grundsätzlich auch Mineralsäuren wie Schwefelsäure, Phosphorsäure, phosphorige Säure, Salpetersäure oder Halogenwasserstoffsäuren wie Fluor-, Chlor-, Brom- oder Jodwasserstoffsäure in Betracht, vorzugsweise jedoch in Wasser unter den genannten Desorptionsbedingungen lösliche organische Säuren wie aliphatische und aromatische Carbon-, Sulfon- oder Phosphonsäuren sowie Phenole.

Geeignete aliphatische und aromatische Mono-, Di- und Polycarbonsäuren, Hydroxy- und Ketocarbonsäuren, sind z.B. Ameisensäure, Essigsäure, Propionsäure, N-Buttersäure, 1-Buttersäure, n-Valeriansäure, Trimethylessigsäure, Capronsäure, n-Heptylsäure, Caprylsäure, Fluoressigsäure, Chloressigsäure, Bromessigsäure, Jodessigsäure, Dichloressigsäure, 2-Chlorpropionsäure, Glykolsäure, Milchsäure, Methoxyessigsäure, Thioglykolsäure, Cyanessigsäure, Glyoxylsäure, Malonsäure, Acrylsäure, Methacrylsäure, Vinylessigsäure, Phenylessigsäure, Oxalsäure, Bernsteinsäure, Glutarsäure, Adipinsäure, Maleinsäure, Phthalsäure, Isophthalsäure, Terephthalsäure, Citronensäure, Äpfelsäure, Benzilsäure, Aconitsäure, Benzoesäure, Zimtsäure, Mandelsäure, Weinsäure, Salicylsäure, Hydroxybenzoesäure, Gallussäure, Dihydroxybenzoesäure, Glutaminsäure oder Asparaginsäure.

Geeignet sind die erfindungsgemäß verwendeten Copolymerisate auch zur Sorption von Sulfonsäuren wie Benzol- bzw. p-Toluolsulfonsäure oder Naphthalin-1- oder -2-sulfonsäure, Naphthalin- oder Benzol-di- oder -polysulfonsäuren, aber auch zur Sorption von substituierten Sulfonsäuren, z.B. der Benzol-, Naphthalin- und Anthrachinonreihe, wie sie zum Teil bei der Fabrikation von Farbstoffen, insbesondere Azofarbstoffen, verwendet werden. Derartige Sulfonsäuren können z.B. Mono-, Di- oder Trisulfonsäuren sein und z.B. durch Hydroxy, Amino, Carboxy, Halogen, Nitro oder Alkyl mit 1 bis 4 C-Atomen ein- oder mehrfach substituiert sein. Derartige Sulfonsäuren sind in der Farbstoffindustrie zum Teil unter ihren Trivial- oder Entdeckernamen oder unter alphanumerischen Bezeichnungen (= "Buchstabensäuren") bekannt.

Schwache einbasische Säuren desorbieren besser als ein- oder mehrbasische starke und mehrbasische schwache Säuren. Besonders bei den gut desorbierenden sauren Verbindungen besteht die Gefahr, daß durch große Mengen von Waschlösungen (Wasser und/oder wasserlösliche organische Lösemittel) nicht nur die mechanisch festgehaltene Lösung, welche vor allem die Hohlräume zwischen den gequollenen Harzkörnern ausfüllt, ausgewaschen wird, sondern zu einem mehr oder weniger großen Teil - auch schon bei niedriger Temperatur - schon die Desorption der gebundenen sauren Verbindung einsetzt. Wenn also an die Reinheit der desorbierten sauren Verbindung keine hohen Anforderungen gestellt werden, kann der Waschprozeß eingeschränkt werden bzw. unter Umständen völlig entfallen.

In vielen Fällen ist es vorteilhaft, die anhaftende bzw. mechanisch festgehaltene Lösung und/oder die Waschlösung durch einen geringen Überdruck von beispielsweise 0,05 bis 0,1 mbar oder ein leichtes Vakuum möglichst weitgehend aus den Harzkorn-Zwischenräumen zu entfernen. Wenn ein Überdruck angewendet wird, kann hierfür Luft oder Inertgas, beispielsweise Stickstoff, verwendet werden, gegebenenfalls aber auch Dampf, insbesondere Sattdampf, der ein Austrocknen des Adsorptionsharzes verhindert und bei einer Desorption bei erhöhter Temperatur einen Temperaturabfall vermeidet. Eine solche Elution bei hohen Temperaturen ist besonders bei sauren Verbindungen vorteilhaft, die bei tiefer Temperatur schlecht löslich sind und gegebenenfalls beim Abkühlen aus der wäßrigen Elutionslösung kristallisieren.

Wenn auf eine hohe Reinheit der adsorbierten sauren Verbindung Wert gelegt wird, wird der Einsatz größerer Mengen an Waschlösung erforderlich. Unter Umständen empfiehlt es sich hierbei auch, die Adsorptionskapazität nicht voll auszuschöpfen und/oder nicht vollständig zu eluieren.

Eine möglichst vollständige Elution der sauren Verbindungen kann erhebliche Wassermengen erfordern, was zu verdünnten Lösungen der Reinsäure führt. Das Aufkonzentrieren dieser Lösungen ist mit apparativem und insbesondere energetischem Aufwand verbunden.

Je nach Art der zu isolierenden sauren Verbindung, dem zur Verfügung stehenden Adsorptionsharz und den apparativen Gegebenheiten wird der Fachmann, gegebenenfalls an Hand einfacher Vorversuche, eine den Gegebenheiten angepaßte optimale Lösung finden.

Da die Desorption im allgemeinen durch erhöhte Temperatur begünstigt wird, ist es vorteilhaft, die Beladung des Harzes und gegebenenfalls das Waschen bei tiefer Temperatur, vorteilhaft Raumtemperatur und darunter, vorzunehmen und mit heißem Wasser bzw. unter Einsatz von Dampf zu eluieren. Sollen schwer desorbierbare Säuren möglichst quantitativ aus dem Harz entfernt werden, so empfiehlt sich die Anwendung von Feststoffextraktionsapparaten, beispielsweise eines Perkolators bzw. Soxhlet-Apparats, wie sie in den einschlägigen Handbüchern wie Houben-Weyl, Methoden der organischen Chemie, Bd. I/1 (1970), S. 310, beschrieben sind.

Üblicherweise wird man die sauren Lösungen durch Säulen leiten, die mit dem Adsorptionsharz gefüllt sind. Ein eventuelles Waschen und die Desorption können im Gleichstrom oder Gegenstrom erfolgen. Durch Verwendung mehrerer Säulen kann die Beladung und Desorption so aufeinander abgestimmt werden, daß eine kontinuierliche Verfahrensführung möglich ist.

In den folgenden Beispielen wird die Erfindung näher erläutert. Prozentangaben beziehen sich hierbei auf das Gewicht, sofern nichts anderes angegeben ist.

Verwendete basische Adsorberharze (B)

B 1: Analog Beispiel 3 der deutschen Offenlegungsschrift 3 324 835 hergestelltes vernetztes Polymerisat aus 95 Gew.-% Vinylimidazol und 5 % Methylenbisacrylamid.

B 2: Analog Beispiel 2 der deutschen Offenlegungsschrift
3 324 834 hergestelltes vernetztes Polymerisat aus
84 % Vinylpyridin, 8 % Trimethylolpropantrimethacrylat und 8 % Vinyltrimethylsilan.

B 3: Ähnlich B 1, aber aus 91 % Vinylimdazol, vernetzt
mit 9 % Methylenbisacrylamid.

B 4: Ähnlich B 1, aber aus 64 % Vinylimidazol und 27 %
N-Vinyl-N-methylacetamid, vernetzt mit 9 % Methylenbisacrylamid.

B 5: Ähnlich B 1, aber aus 45,5 % Vinylimdazol und
45,5 % N-Vinyl-N-methylacetamid, vernetzt mit 9 %
Methylenbisacrylamid.

B 6: Ähnlich B 1, aber aus 27 % Vinylimidazol und 64 %
N-Vinyl-N-methylacetamid, vernetzt mit 9 % Methylenbisacrylamid.

B 7: Ähnlich B 1, aber aus 30 % Vinylimidazol und 50 %
N-Vinyl-N-methylacetamid, vernetzt mit 20 % Methylenbisacrylamid.

B 8: Ähnlich B 1, aber aus 14 % Vinylimidazol und 77 %
N-Vinyl-N-methylacetamid, vernetzt mit 9 % Methylenbisacrylamid.

B 9: Schwach basischer handelsüblicher Ionenaustauscher
mit Dimethylaminogruppen auf Acryl-Divinylbenzol-
Basis ([R]AMBERLITE IRA 35, Rohm & Haas, Philadelphia,
USA)

B 10: Wie B 9, auf Basis Styrol-Divinylbenzol (AMBERLITE
IRA 93 SP)

B 11: Wie B 10 ($^R$DOWEX MWA-1, Dow Chemical)

B 12: Ähnlich B 11 (DOWEX WGR-2)

Verwendete technische Citronensäurelösungen (TC I, II und III): Die Lösungen wurden bei der technischen Herstellung von Citronensäure aus Lösungen von Hexosen mit Hilfe des Pilzes Aspergillus niger erhalten. Sie enthielten gemäß Ionenchromatographie folgende Säuren bzw. Säurereste (in Gew.-%):

|                         | TC I | TC II | TC III  |
| ----------------------- | ---- | ----- | ------- |
| Citronensäure           | 7,5  | 8,60  | 9,50    |
| Essigsäure              | 0    | 0,05  | 0,16    |
| $SO_4^{--}$             | 0,27 | 0,35  | 0,25    |
| $Cl^-$                  | 0,27 | 0,29  | < 0,01  |
| Gesamtsäure (als Citronensr. berechnet) | 8,2 | 9,80 | 10,00 |

Die Lösungen wurden z.T. mit soviel 1 N NaOH versetzt, daß entweder die organischen Säuren vollständig (Buchstabe "V") bzw. nur zur Hälfte ("H") neutralisiert wurden. "N" bedeutet "nicht neutralisiert".

<u>Beispiele 1 - 44</u>

Säulen-Durchlauf-Verfahren

(Allgemeine Verfahrensweise betreffend Beispiele 1 - 43):

100 Gramm eines trockenen 100 %igen basischen Adsorberharzes (B1 - B8) werden bei Raumtemperatur 15 Minuten mit 500 ml vollentsalztem Wasser verrührt, abgesaugt und zweimal mit je 250 ml vollentsalztem Wasser gewaschen. Es resultiert ein wasserfeuchtes Adsorberharz mit einem Trockengehalt von ca. 8 - 50 %.

A Gramm feuchtes Adsorberharz (B1 - B12), werden in eine Adsorptionssäule von 40 mm Durchmesser und 280 mm Höhe gefüllt.

Zur Beladung des feuchten Harzes mit einer Säure (C) läßt man bei 25°C D Gramm einer 10 %igen Säurelösung innerhalb einer Stunde durch die Harzschicht wandern. Nach Bestimmung der Menge und des Säuregehalts des Durchlaufs wird die Gesamtsäure (E Gramm) in der Säule berechnet. Es wird mit F Gramm Wasser von 25°C gewaschen, die Säuremenge (G Gramm) in der Waschlösung durch Bestimmung der Mengen und des Säuregehalts der Waschlösung ermittelt und die Menge der Säure in der Säule vor der Elution (H Gramm) berechnet.

Zur Elution dieser H Gramm Säure läßt man I Gramm vollentsalztes "Eluier-Wasser" von K°C innerhalb von 1 Stunde durch das Harz hindurchlaufen.

Nach Ermittlung der Menge und des Säuregehalts des Eluats werden die Menge (L Gramm) an Säure im Eluat, der Prozentanteil ($M = L/H \cdot 100$ (%)) von eluierter (L) zu adsorbierter (H) Säure, die Summe ($N = G + L$) der Säuremengen in Waschlösung und Eluat und der Prozentanteil

$$P = \frac{G + L}{E} \cdot 100$$ an ausgewaschener (G) und eluierter (L) Säure, bezogen auf die Anfangssäuremenge (E) in der Säule errechnet. Die ermittelten Daten sind in der folgenden Tabelle zusammengestellt. Ein "a" bedeutet, daß zusätzlich die angegebene Flüssigkeit mit Stickstoff von 0,1 barü aus dem Harz abgedrückt wurde.

Tabelle

| Bsp. | Harz feucht (A g) | Harz art (B) | Säure art (C) | 10 %ige Säure (D g) | Gesamt- säure in Säule (E g) | Wasch- wasser (F g) | Sr. in Waschlsg. (G g) | Sr. in Säule vor El. (H g) | Eluier- Wasser (I g) | Eluier- Temp. (K°C) | Sr. im Eluat (L g) | El.Sr./ Sr. vor Elution (M %) | Sr. in Waschlsg. + Eluat (N g) | N pro Gesamt- säure (E) (P %) |
|---|---|---|---|---|---|---|---|---|---|---|---|---|---|---|
| 1 | 65,1 | B 1 | Essigsr. | 400 | 21,5 | 200 | 13,8 | 7,7 | 200 | 90 | 4,0 | 51,9 | 17,8 | 82,8 |
| 2 | 61,0 | " | Essigsr. | 300 | 22,3 | 500 | 15,7 | 6,6 | 300 a | 90 | 5,7 | 86,4 | 21,4 | 96,0 |
| 3 | 61,0 | " | Essigsr. | 400 a | 21,3 | 50 a | 4,7 | 16,6 | 300 a | 90 | 15,8 | 95,2 | 20,5 | 96,2 |
| 4 | 61,0 | " | Essigsr. | 400 a | 21,3 | 50 a | 4,9 | 16,4 | 300 a | 25 | 13,2 | 80,5 | 18,1 | 85,0 |
| 5 | 49,5 | " | Glykolsr. | 400 a | 21,1 | 50 s | 5,1 | 16,0 | 200 a | 90 | 15,4 | 96,3 | 20,5 | 97,1 |
| 6 | 64,5 | " | Milchsr. | 444 | 34,9 | 30 a | 8,2 | 26,7 | 200 a | 90 | 24,6 | 92,1 | 32,8 | 94,0 |
| 7 | 64,5 | " | Milchsr. | 444 a | 31,7 | - | - | 31,7 | 200 | 90 | 19,5 | 61,5 | 19,5 | 61,5 |
| 8 | 64,5 | " | Glyoxylsr. | 400 | 28,6 | 30 a | 6,7 | 21,9 | 200 a | 90 | 15,1 | 68,9 | 21,8 | 76,2 |
| 9 | 65,1 | " | Glyoxylsr. | 400 a | 23,9 | - | - | 23,9 | 200 | 90 | 17,8 | 74,5 | 17,8 | 74,5 |
| 10 | 49,5 | " | Weinsr. | 400 a | 33,8 | 100 a | 10,8 | 23,0 | 150 a | 90 | 8,4 | 36,5 | 19,2 | 56,8 |
| 11 | 49,5 | " | Citronensr. | 400 a | 37,6 | 100 a | 8,7 | 28,9 | 150 a | 90 | 9,4 | 32,5 | 18,1 | 48,1 |
| 12 | 61,0 | " | Citronensr. | 400 a | 37,7 | 200 a | 11,8 | 25,9 | 100 a | 90 | 3,3 | 12,7 | 15,1 | 40,1 |
| 13 | 61,0 | " | Asparagins. | 5000 a | 10,2 | 200 a | 1,0 | 9,2 | 200 a | 90 | 5,6 | 54,9 | 6,6 | 64,7 |
| 14 | 49,5 | " | Benzolsulfonsäure | 370 a | 29,9 | 50 a | 2,0 | 27,9 | 200 a | 90 | 3,1 | 11,1 | 5,1 | 17,1 |
| 15 | 52,3 | " | Resorcin | 416 a | 12,1 | 50 a | 1,1 | 11,0 | 200 a | 90 | 8,6 | 78,2 | 9,7 | 80,2 |
| 16 | 51,5 | B 3 | $\Delta^2$-Phospholensäure | 400 | 23,0 | 150 | 6,6 | 16,4 | 300 | 90 | 8,2 | 50,0 | 14,8 | 64,3 |
| 17 | 51,5 | " | Ethanphosphonsäure | 390 | 24,3 | 300 | 8,6 | 15,7 | 300 | 90 | 4,5 | 28,7 | 13,1 | 53,9 |
| 18 | 51,5 | " | Schwefelsäure | 420 | 14,8 | 300 | 6,2 | 8,6 | 300 | 90 | 3,2 | 37,2 | 11,8 | 79,7 |
| 19 | 51,5 | " | Salzsäure | 424 | 11,4 | 300 | 5,8 | 5,6 | 300 | 90 | 0,4 | 7,1 | 6,2 | 52,6 |
| 20 | 51,5 | " | Glykolsr. | 486 | 20,1 | 150 | 10,4 | 9,7 | 200 | 90 | 8,0 | 82,5 | 17,7 | 88,1 |
| 21 | 60,4 | B 4 | Flußsäure | 40 | 3,6 | 700 | 1,0 | 2,6 | 600 | 90 | 1,1 | 43,2 | 2,2 | 61,1 |

0167957

| Bsp. | Harz feucht (A g) | Harz-art (B) | Säure-art (C) | Säure (D g/%ig) | | Gesamt-säure in Säule (E g) | Wasch-wasser (F g) | Sr. in Waschlsg. (G g) | Sr. in Säule vor El. (H g) | Eluier-Wasser (I g) | Eluier-Temp. (K°C) | Sr. im Eluat (L g) | El.Sr./Sr. vor Elution (M %) | Sr. in Waschlsg. + Eluat (N g) | N pro Gesamt-säure (E) (P %) |
|---|---|---|---|---|---|---|---|---|---|---|---|---|---|---|---|
| 22 | 60,4 | B 4 | Glyoxylsr. | 404 | 10 | 16,3 | 150 | 8,5 | 7,8 | 200 | 90 | 3,7 | 47,4 | 11,5 | 70,6 |
| 23 | 60,4 | " | TC II N | 465 | 8,6 | 25,8 | 100 | 3,9 | 19,9 | 150 | 90 | 3,7 | 23,3 | 7,6 | 29,4 |
| 24 | 60,4 | " | TC II V | 465 | " | 19,7 | 100 | 3,3 | 20,3 | 150 | 90 | 5,4 | 26,6 | 8,7 | 44,2 |
| 25 | 60,4 | " | TC II V | 465 | " | 19,8 | 300 | 5,2 | 14,6 | 150 | 90 | 2,3 | 15,7 | 7,5 | 37,9 |
| 26 | 66,7 | B 5 | TC II V | 465 | " | 17,8 | 300 | 9,3 | 8,5 | 150 | 90 | 2,0 | 23,5 | 11,3 | 63,5 |
| 27 | 66,7 | " | TC II V | 465 | " | 17,8 | 250 | 8,1 | 9,7 | 60 a | 90 | 1,4 | 14,4 | 9,5 | 53,4 |
| 28 | 65,8 | " | TC II V | 349 | " | 14,3 | - | - | 14,3 | 200 | 25 | 6,7 | 46,8 | 6,7 | 46,8 |
| 29 | 65,8 | " | TC II V | 349 | " | 13,3 | - | - | 13,3 | 200 | 90 | 8,3 | 62,4 | 8,3 | 62,4 |
| 30 | 65,8 | " | TC II V | 349 a | " | 15,2 | - | - | 14,4 | 200 a | 90 | 8,8 | 61,1 | 8,8 | 61,1 |
| 31 | 65,8 | " | TC II H | 465 | " | 16,7 | 30 | 2,1 | 14,6 | 100 | 90 | 6,3 | 43,2 | 8,4 | 50,3 |
| 32 | 52,5 | B 3 | TC II H | 465 | " | 16,1 | 30 | 0,6 | 15,4 | 100 | 90 | 2,6 | 16,9 | 3,2 | 19,9 |
| 33 | 28,0 | B 2 | TC II H | 465 | " | 26,1 | 30 | 2,9 | 23,2 | 100 | 90 | 11,5 | 49,6 | 14,4 | 55,2 |
| 34 | 65,6 | B 6 | TC I H | 533 | 7,5 | 11,0 | 30 | 2,3 | 8,7 | 100 | 90 | 5,5 | 63,2 | 7,8 | 70,9 |
| 35 | 51,5 | B 7 | TC I H | 533 | " | 8,1 | 30 | 1,4 | 6,7 | 100 | 90 | 3,5 | 52,2 | 4,9 | 60,4 |
| 36 | 59,3 | B 8 | TC I H | 533 | " | 5,8 | 30 | 2,0 | 3,8 | 100 | 90 | 3,8 | 100,0 | 5,8 | 100,0 |
| 37 | 20 | B 9 | TC III H | 211 | 9,5 | 4,2 | 30 | 2,0 | 2,2 | 50 | 90 | 0,8 | 36,4 | 2,8 | 66,7 |
| 38 | 20 | B 10 | TC III H | 211 | " | 5,2 | 30 | 1,9 | 3,3 | 50 | 90 | 1,3 | 39,4 | 3,2 | 60,4 |
| 39 | 20 | B 11 | TC III H | 211 | " | 5,3 | 30 | 2,0 | 3,3 | 50 | 90 | 1,3 | 39,4 | 3,3 | 62,2 |
| 40 | 20 | B 12 | TC III H | 211 | " | 2,5 | 30 | 1,5 | 1,0 | 50 | 90 | 0,7 | 70,0 | 2,2 | 88,0 |
| 41 | 20 | B 9 | TC III H | 211 | " | 3,9 | 30 | 1,8 | 2,1 | 50 | 90 | 1,7 | 81,0 | 3,8 | 97,4 |
| 42 | 20 | B 10 | TC III H | 211 | " | 6,1 | 30 | 2,2 | 3,9 | 50 | 90 | 1,9 | 48,7 | 4,1 | 67,2 |
| 43 | 20 | B 11 | TC III H | 211 | " | 6,9 | 30 | 1,8 | 5,1 | 50 | 90 | 1,6 | 31,4 | 3,4 | 49,3 |
| 44 | 20 | B 12 | TC III H | 211 | " | 3,6 | 30 | 1,3 | 2,3 | 50 | 90 | 0,7 | 30,4 | 2,0 | 55,6 |

0167957

Beispiel 45

Extraktionsverfahren unter Verwendung eines Perkolators 195 g eines wie beim Säulen-Durchlauf-Verfahren mit 56,6 g Citronensäure beladenen Harzes vom Typ B 1 (trockene Ausgangsharzmenge: 50 g) werden in eine Extraktionshülse eingetragen und in einen Perkolator (∅ 52 mm, Höhe bis Überlauf 190 mm) eingesetzt. Im Destillationskolben werden 700 ml Wasser bis zum Sieden erhitzt und mit dem heißen Kondensat das mit der Säure beladene Harz kontinuierlich extrahiert. Die nach bestimmten Zeiten extrahierte Menge (in g) an Citronensäure und der Anteil an extrahierter Säure (in %) werden durch Messung der Säurezahlen und der Extraktmengen errechnet. Destillationsgeschwindigkeit: ca. 1 Liter/Std. Es werden extrahiert:

| Stunden | Menge an extr. Citr.sr(g) | Anteil an extr.Sr.(%) |
|---|---|---|
| 1,7 | 16,7 | 29,5 |
| 3,5 | 21,1 | 37,3 |
| 5,0 | 30,2 | 53,3 |
| 24,0 | 48,6 | 85,9 |

Es verbleibt ein gewisser Anteil von Rest-Säure (11,3 g = 24,3 %) im Harz. Es zeigt sich, daß dieser Anteil an Rest-Säure auch nach zehnfacher Beladung und Extraktion des Harzes in der oben angegebenen Weise konstant bleibt, so daß die Säulenkapazität auch nach zahlreichen Versuchen stets bis zu ca. 75 % ausgenützt werden kann.

Beispiel 46

Extraktionsverfahren unter Verwendung einer Soxhlet-Apparatur 50 g eines mit 10,5 g Citronensäure beladenen und mit 2 mal 150 ml Wasser gewaschenen Harzes vom Typ B 1

(trockene Ausgangsharzmenge: 12,5 g) werden in eine Extraktionshülse eingetragen und in einem Soxhlet-Apparat mit 300 ml Wasser extrahiert. Pro Stunde finden vier Abheberungen statt. Die nach bestimmten Zeiten extrahierte Menge (in g) an Citronensäure und der Anteil an extrahierter Säure (in %) wird aus den Säurezahlen und den Extraktmengen errechnet. Es werden extrahiert:

| Stunden | Extrahierte Citr.sr.(g) | Anteil an extr.Sr.(%) |
|---|---|---|
| 2,5 | 2,5 | 24,9 |
| 5,0 | 3,8 | 36,2 |
| 9,5 | 4,5 | 42,8 |
| 12,0 | 5,0 | 47,8 |
| 20,0 | 6,8 | 64,8 |

Im Harz verbleiben 3,7 g (35,2 %) an Rest-Säure. Dieser Anteil bleibt auch nach achtfacher Beladung und Extraktion des gleichen Harzes konstant. Die Säulenkapazität kann stets bis zu ca. 65 % ausgenützt werden.

Beispiel 47

Es wird gearbeitet wie im Beispiel 46. Es werden jedoch 68,2 g eines mit 22,46 g Citronensäure beladenen Harzes vom Typ B 2 (trockene Harzmenge: 20 g) eingesetzt. Es werden extrahiert:

| Stunden | Extrahierte Citr.sr.(g) | Anteil an extr.Sr.(%) |
|---|---|---|
| 7 | 13,1 | 58,3 |
| 15 | 15,5 | 69,0 |
| 23 | 20,1 | 83,4 |
| 31 | 22,4 | 99,7 |

Beispiel 48

Es wird gearbeitet wie im Beispiel 46. Es werden jedoch 121 g eines mit 42,2 g Benzolsulfosäure beladenen Adsorberharzes vom Trockengewicht 20 g eingesetzt.
Es werden extrahiert:

| Stunden | Extrahierte Benzolsulfosäure (g) (g) | Anteil an extrah. Sr. pro Beladung (%) |
|---|---|---|
| 2 | 2,5 | 10,3 |
| 5 | 4,8 | 19,8 |
| 9 | 7,0 | 28,9 |
| 15 | 9,2 | 38,0 |
| 17 | 9,5 | 39,2 |

0167957

**Patentansprüche:**

1. Verfahren zur Isolierung wasserlöslicher saurer Verbindungen durch Adsorption an basischen Adsorberharzen, dadurch gekennzeichnet, daß man die sauren wäßrigen Lösungen mit schwach basischen Adsorberharzen in Kontakt bringt und die adsorbierten sauren Verbindungen mit Wasser von 1 bis etwa 100°C und/oder Dampf desorbiert.

2. Verfahren nach Anspruch 1, dadurch gekennzeichnet, daß die Desorption bei 10 bis 90°C erfolgt.

3. Verfahren nach Anspruch 1 oder 2, dadurch gekennzeichnet, daß die beladenen Harze vor der Desorption mit Wasser und/oder organischen Lösungsmitteln gewaschen werden.

4. Verfahren nach einem oder mehreren der vorhergehenden Ansprüche, dadurch gekennzeichnet, daß das schwach basische Adsorberharz ein schwach basischer Anionenaustauscher mit tertiären Aminogruppen ist.

5. Verfahren nach Anspruch 4, dadurch gekennzeichnet, daß der schwach basische Anionenaustauscher ein Polymerisat aus

a) 10 - 99,9 % Vinylimidazol und 0 - 80 % N-Vinyl-N-methylacetamid und 0,1 - 50 % Methylenbisacrylamid oder aus

b) 75 - 99,9 % Vinylpyridin, 0,1 - 25 % Trimethylolpropantrimethylacrylat und 0 - 25 % Vinyltrimethylsilan oder

c) auf Basis Styrol-Divinylbenzol mit Dimethylaminogruppen oder

d) auf Basis Acrylat-Divinylbenzol mit niederen Dialkylaminogruppen

ist.

6. Verfahren nach einem oder mehreren der vorhergehenden Ansprüche, dadurch gekennzeichnet, daß die Beladung des Harzes mit den sauren Verbindungen bei tiefer Temperatur und die Desorption mit heißem Wasser oder unter Einsatz von Dampf erfolgt.

7. Verfahren nach einem oder mehreren der vorhergehenden Ansprüche, dadurch gekennzeichnet, daß die Desorption unter Anwendung eines Feststoffextraktionsapparats erfolgt.